# EUROPEAN PATENT APPLICATION

(11) **EP 2 066 041 A1**
(43) Date of publication of application: **03.06.2009**
(21) Application number: 07816984.4
(22) Date of filing: 26.09.2007
(51) Int. Cl.: H04B 3/46

(54) **A METHOD AND APPARATUS FOR QUICKLY DIAGNOSING INTER-COMMUNICATION PROBLEM OF DIGITAL SUBSCRIBER LINE TRANSCEIVERS**

(30) Priority: 30.09.2006 CN 200610140432; 09.10.2006 CN 200610152494
(71) Applicant: Huawei Technologies Co., Ltd., Shenzhen, Guangdong Province 518129 (CN)
(72) Inventor: ZHANG, Hao, Guangdong 518129 (CN); WANG, Binfeng, Guangdong 518129 (CN); YAN, Linzhi, Guangdong 518129 (CN); SONG, Liyuan, Guangdong 518129 (CN); ZHANG, Jian, Guangdong 518129 (CN); LIN, Zhongyu, Guangdong 518129 (CN); WANG, Jingfeng, Guangdong 518129 (CN)
(74) Representative: Thun, Clemens
(86) International application number: PCT/CN2007/070793
(87) International publication number: WO 2008/037223

(57) **Abstract**

A method for quickly diagnosing inter-communication problem of digital subscriber line transceivers, which records the interactive messages between central office xDSL terminal unit (xTU-C) and remote xDSL terminal unit (xTU-R), amends specific message of said interactive messages, executes interactive test utilizing amended message, and analyzes the result of said test to confirm the reason of inter-communication problem. The embodiments also provide an apparatus for quickly diagnosing inter-communication problem of digital subscriber line transceivers. The embodiments efficiently resolve the inter-communication problem between xTU-C and xTU-R which are different xDSL transceivers, provide convenience to telecommunication service provider and telecommunication device maintenance personnel, and save the cost. Device maintenance personnel can quickly, efficiently and accurately resolve inter-communication problem of xDSL devices, so as to simplify processing flow, reduce workload and difficulty, save substantive cost, and improve efficiency.

## Description

### Field of the Invention

The present invention relates to communication, and more particularly, to a method and device for fast diagnosis of digital subscriber line transceiver interoperability problem.

### Background of the Invention

XDSL (Digital Subscriber Line, abbreviated as DSL, and xDSL refers to various digital subscriber lines) is a kind of high speed data transmission technique on telephone twist pairs (Unshielded Twist Pair, UTP). Through years of development, it has been developed from the first generation Asymmetrical Digital Subscriber Line (ADSL) to the today's second generation second generation ADSL (ADSL2), extend down stream bandwidth ADSL2 (ADSL2+) and up-to-date Very-high-bit-rate Digital Subscriber Line (VDSL) and Very-high-bit-rate Digital Subscriber Line 2 (VDSL2). ADSL and VDSL are multi-carrier systems, in which the frequency domain is divided in a manner of discrete multi-tone modulation (DMT) into a plurality of sub-channels without overlapping each other, each of which is specified for uplink or downlink transmission. Each sub-channel corresponds to a carrier of different frequency, and the Quadrature Amplitude Modulation (QAM) modulation is performed on different carriers respectively. Such a division of the frequency domain makes DSL design much convenient.

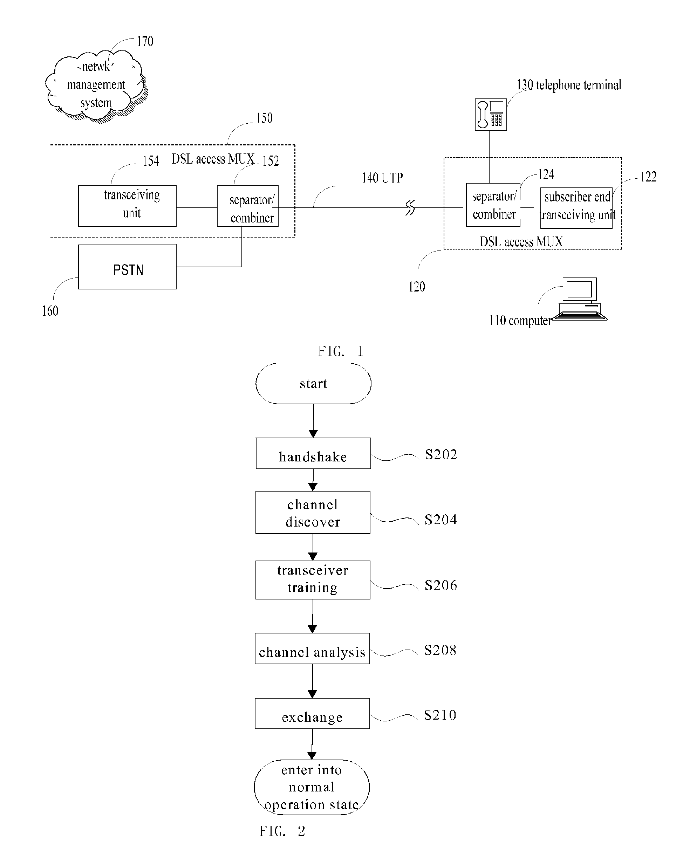

Besides DSL for base band transmission such as ISDN Digital Subscriber Line (IDSL) and Symmetrical Highbit Digital Subscriber Line (SHDSL), the frequency division multiplex technique is used in xDSL for pass band transmission, so that xDSL and Plain Old Telephone Service (POTS) can coexist on the same twisted-pair, wherein the high frequency band is occupied for xDSL, the base band portion below 25KHz is occupied for POTS, and POTS signals and xDSL signals are separated through a separator. The pass band transmission of xDSL is modulated through discrete multi-tone (DMT). The system for providing multiple xDSL accesses is called as DSL Access Multiplexer (DSLAM), for which a system reference model is as shown in figure 1.

Figure 1 shows a reference model of an xDSL system according to the prior art.

As shown in figure 1, the DSLAM 120 includes a subscriber end transceiving unit 122 and a separator/combiner 124. In the uplink direction, the subscriber end transceiving unit 122 receives data from a computer 110, modulates the received data and transmits the DSL signal obtained through the modulation to the separator/combiner 124. The separator/combiner 124 combines the DSL signal from the subscriber end transceiving unit 122 and the POTS signal from the telephone terminal 130. The combined signal is received by a separator/combiner 152 in a DSLAM 150 at the peer end through transmission on multiple unshielded twisted-pairs (UTP) 140. The separator/combiner 152 separates the received signal, transmits the POTS signal therein to a public switched telephone network (PSTN) 160, and transmits the DSL signal therein to a transceiving unit 154 of the DSLAM 150. The transceiving unit 154 then amplifies the received signal and transmits it to a network management system (NMS) 170. In the downlink direction of signal, the signals are transmitted in an opposite order to the above.

Currently, a family of standards for xDSL is formulated, including various technique standards providing different access rates, coverage ranges and target applications. In the same standard, there have been annexes for meeting different region application requirements or frequency spectrum requirements (see the following table 1). ITU-T refers to International Telecommunication Union-Telecommunication Standardization sector.

**Table 1: ITU-T xDSL standard family and its annexes**

| Standard | Annex | Region requirement |
|---|---|---|
| G. 991.2 | Annex A/B | SHDSL Region 1 (north America)/region 2 (Europe) requirement |
| G. 992.1 | Annex A | ADSL over POTS |
| | Annex B | ADSL over ISDN |
| | Annex C | ADSL over POTS under TCM - ISDN cross talk environment |
| G. 992.2 | Annex A/B | Separator-free ADSL (overlapped/non overlapped frequency spectrum) |
| | Annex C | Separator-free ADSL under TCM - ISDN cross talk environment |
| G. 992.3 | Annex A | ADSL2/2+ over POTS |
| G. 992.5 | Annex B | ADSL2/2+ over ISDN |
| | Annex C | ADSL2/2+ over POTS under TCM - ISDN cross talk environment |
| | Annex I | Improved fully digital loop circuit mode compatible with ADSL over POTS |
| | Annex J | Improved fully digital loop circuit mode compatible with ADSL over ISDN |
| | Annex M | ADSL2/2+ over POTS with extended uplink band width |
| G. 992.3 | Annex L | ADSL2 over POTS with extended distance |
| G. 993.1 | Annex A | First generation very high speed digital subscriber line transceiver region 1 (north America) requirement |
| | Annex B | First generation very high speed digital subscriber line transceiver region 2 (Europe) requirement |
| | Annex C | First generation very high speed digital subscriber line transceiver region 3 (Japan) requirement |
| G. 993.2 | Annex A | Second generation very high speed digital subscriber line transceiver region 1 (north America) requirement |
| | Annex B | Second generation very high speed digital subscriber line transceiver region 2 (Europe) requirement |
| | Annex C | Second generation very high speed digital subscriber line transceiver region 3 (Japan) requirement |

The xDSL technique has developed quickly from ADSL to ADSL2+ for a period of time of four to five years. The VDSL2 technique will grow into commercial application at the end of 2006 and the beginning of 2007. However, those remote xTU-Rs (Remote xDSL Terminal Unit, i. e. subscriber end transceiving unit 122 in figure 1) of ADSL and ADSL2+, already existing on the network, may continue to be in use. Therefore, to accommodate the existence of xDSL devices of multiple modes, new office end devices should be compatible with the old modes, i. e. supporting various xDSL modes in the same time. However, because xDSL techniques such as ADSL/ADSL2+ and VDSL2 have significant differences including the difference in rate (maximum downlink rate of ADSL is 8M, maximum downlink rate of ADSL2+ is 24M,achievable symmetrical rate of VDSL approaches 100M) and the difference in some characteristics such as PSD Shaping (Power Spectrum Density Shaping) and Notch. Due to the differences in these characteristics, various xDSL standards include different capability parameters, and therefore, in configuring a line, it is necessary to perform the configuration for different capability parameters of different activating modes, so as to achieve the optimal performance.

The activation is an initializing process where the xTU-C (Central Office xDSL Terminal Unit) and the xTU-R measure and analyze the channel condition and exchange parameters required for establishing a connection based on certain rules, finally implementing the connection according to the negotiation result. A general initializing process for xDSL (also called as activation process) is as shown in figure 2 (taking ADSL2+ as an example), which includes the following steps:

XDSL transceivers have to undergo a line initialization process from initiation to normal operation, and in this process, a Handshake is firstly performed (step S202), during which the standards of G. 992.x and G. 993.x comply with G. 994.1 standard (G. handshake, handshake protocol, abbreviated as G. hs). Therefore, the xDSL transceivers both exchange capabilities supported by them in a manner prescribed in G. 994.1, and then negotiate with each other to select a corresponding activating protocol mode (G. 992.1/G. 992.3/G. 992.5/G. 993.2 and etc.). Then, according to the selected activating mode, the xDSL transceivers both enter phases such as channel discovery (step S204), transceiver training (step S206), channel analysis (step S208) and exchange (step S210) prescribed by corresponding protocols (called as initializing process or activation process), and finally enter the normal operation condition (show time). Although the above process is described based on ADSL2+, xDSL techniques such as ADSL and VDSL2 are substantially the same. T1.413 standard, whose handshake process does not comply with G 994.1 standard, is similar to ADSL standard, and its main capability parameters are not exchanged in CLR manner during the handshake phase, but are exchanged during the entire activation process. Further, the phases undergone through the activating for T1.413 standard are also similar to those for ADSL standard.

However, the above entire activation process is very complex, errors in signals transmitted in any phase or their durations may cause problems, and due to the mutual influence between the exchanged parameters, the parameters have to meet a certain relation, or otherwise an interoperability problem (IOP) will occur. Because of differences in understanding and actual support to various xDSL standards by various xDSL chip manufactures and device suppliers, especially because of the commercial application of VDSL2, a lot of interoperability problems between xTU-C and xTU-R will occur in actual applications, mainly including the following interoperability problems between digital subscriber line transceivers:
1. Failure in normal activation.
2. Unstable activation, proneness to link drop.
3. Undesired activating parameters, for example, very low line rate after activation.

To solve the above interoperability problem between digital subscriber line transceivers, currently commercially available DSLAM devices generally provide a method of remotely inspecting the device log: remotely logging in the device by a maintenance person, inspecting the operation log and alarm log recorded in to the device, analyzing personal operation records and device abnormity records upon a failure on one xDSL line (for example: which service line is failed, change of the line condition, whether there is abnormity in service traffic and etc.)

However, the existing method of locating the problem by inspecting the log has limited functions in that, generally, only some faults caused by improper operations on the device by non-skilled persons can be detected, or it is possible to record the device condition upon failure to assist the maintenance person to reproduce the problem and then to diagnose through other methods. The technique fails to perform an automatic analysis on the collected data to obtain a conclusion, and therefore has a higher requirement on the technical skills of the maintenance person, thus reducing the efficiency. In addition, this technical cannot detect the interoperability problem between the xDSL transceivers caused by the device itself, and cannot distinguish whether the failure in both ends' normal activation has been caused by the office end device or the terminal device.

Another solution is on-site analysis. According to the solution, once a problem occurs in an xDSL device running on a telecommunication wideband access network in the whole world, if the problem is determined to be an interoperability problem by excluding the line environment interference and manual operation error, a current diagnosing technique is: sending someone especially familiar with standards and exchanged information associated with ADSL/VDSL to the field where the accident has occurred to collect and analyze information; or sending the office end xDSL line card or CPE device to the manufacturer to repeat the problem for analyzing and locating. Further, it is required to connect a dedicated debug tool to the device to collect data in real time and perform the analysis based on his experience with reference to the standard.

However, on-site analysis imposes a strict technical requirement on the engineer for diagnosing the problem; the cost for transferring persons and materials is very high; because of the need of connecting the debug tool to the device, diagnosing the interoperability problem on one xDSL subscriber line may interrupt normal services on other subscriber lines. This reduces the efficiency of diagnosing the xDSL interoperability problem, and is adverse to both device suppliers and telecommunication operators.

Besides the above interoperability problem in the activation process, there is also interoperability problem such as link drop in the state of transceiver communication. The link drop is a serious problem always puzzling the DSLAM device manufacturers and operators, and is generally associated with factors such as parameter configuration, device difference, environment and etc. The link drop randomly occurs in many cases, and presents a large uncertainty. Presently, there is no better locating means for the link drop, and the cause for link drop can only be inferred according to limited statistical information, increasing the difficulty of locating the problem.

Presently, the DSLAM device may record LOSS (Loss of Signal Second), CRC (Cyclic Redundancy Check Code) check error number, LOFS (Loss of Frame Second), link drop number on any digital subscriber line in 24 hours or 30 days. The information may be very important references for locating the link drop. However, the information is insufficient, and it is difficult to only use the information to judge a specific cause of the link drop. Therefore, once a little more link drops occur, the better choice is to send an experienced engineer to the site to locate the problem according to limited record information in the DSLAM device.

The link drop problem is uncertain. In the prior art, it is unable to obtain important information at the time of link drop. The only way is to depend on the maintenance person's experience to judge the cause of the problem according to the limited statistical information. This has a strict technical requirement on the engineer for locating the problem on the site. Sometimes special dedicated instruments are needed to assist the analysis, increasing the difficulty and cost for the operator and device supplier to solve the problem.

It can be seen that the current diagnosing ways for the interoperability problem between xDSL devices on the wideband access network have higher cost and lower efficiency. Therefore, there is a need for a fast diagnosing solution for the interoperability problem between digital subscriber line transceivers, making it possible to solve the above problem in the prior art.

### Summary of the Invention

Various embodiments of the present invention provide a fast diagnosing method and devices for interoperability problem between digital subscriber line transceivers, making it possible to solve the problem of high cost and low efficiency in the prior art of solving the interoperability problem between digital subscriber line transceivers.

The present invention is implemented through the following technical solutions:

A fast diagnosing method for the interoperability problem between digital subscriber line transceivers, includes: recording messages exchanged between an office end unit xTU-C for digital subscriber line and a remote terminal unit xTU-R for digital subscriber line; modifying a specific message in the exchange messages to perform an exchange test with the modified message; and analyzing the result of the test to determine the cause of the interoperability problem.

A fast diagnosing device for the interoperability problem between digital subscriber line transceivers, includes: a recording module configured to record messages exchanged between an office end unit xTU-C for subscriber line and a remote terminal unit xTU-R for subscriber line; an test module configured to modify a specific message in the exchange messages to perform an exchange test with the modified message; and an analyzing module configured to analyze the result of the test to determine the cause of the interoperability problem.

It can be seen from the technical solutions provided by the above embodiments of the present invention that, because the xDSL transceiver itself integrates the function of collecting and saving the messages exchanged between the xTU-C and the xTU-R, or the function having inbuilt standard exchange message, the embodiments of the present invention can provide to subscribers functions of modifying and constructing the contents of exchange messages at the office end or terminal end and performing the test to effectively solve the interoperability problem between different xDSL transceiver xTU-C and xTU-R, thus providing convenience to the telecommunication service operator and the maintenance persons for the telecommunication devices, and saving the cost. The maintenance person for devices can fast, effectively and accurately locate and solve the interoperability problem between xDSL devices, thereby simplifying the handling process, reducing the workload and difficulty, saving a large amount of cost and increasing the efficiency.

### Brief Description of the Drawings

The accompanying drawings described herein are used to provide further understanding to the embodiments of the present invention, and form a portion of the present application. The schematic examples and their descriptions for the embodiments of the present invention are used for illustrating the present invention, and do not form any improper restriction to the present invention. In the accompanying drawings:

Figure 1 shows a reference model of an xDSL system according to the prior art;

Figure 2 show a flow chart of ADSL2+ initializing process according to the prior art;

Figure 3 shows a flow chart of a fast diagnosing method for the interoperability problem in the activation process of digital subscriber line transceivers according to an embodiment of the present invention;

Figure 4 show a scenario of application maintenance for xDSL devices;

Figure 5 shows a flow chart of a fast diagnosing method for the application scenario in figure 4 according to an embodiment of the present invention;

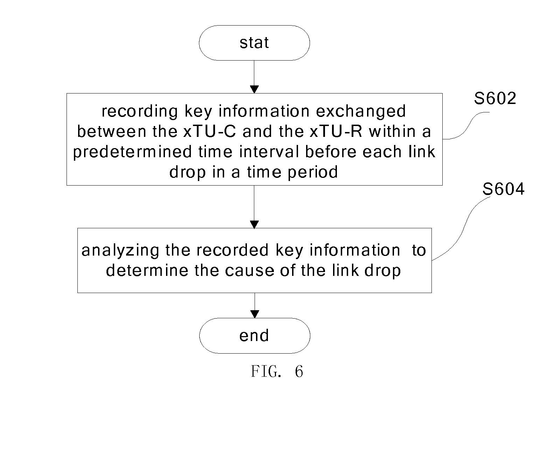

Figure 6 shows a flow chart of a fast diagnosing method for the link drop problem in digital subscriber lines according to an embodiment of the present invention;

Figure 7 shows a flow chart of a fast diagnosing method for the link drop problem in digital subscriber lines according to an embodiment of the present invention; and

Figure 8 is a block diagram showing a fast diagnosing device for the interoperability problem between digital subscriber line transceivers according to an embodiment of the present invention.

### Detailed Description of the Embodiments

The present invention is described by referring to the following accompanying drawings and embodiments.

According to the embodiments of the present invention, by recording messages exchanged between the xDSL transceivers (xTU-C or xTU-R), the cause of the interoperability problem is determined by analyzing the recorded exchange messages, thereby fast and accurately locating the interoperability problem, reducing the workload and difficulty and saving the cost.

The interoperability problem according to the embodiments of the present invention includes the interoperability problem in the xDSL transceiver activation process and the interoperability problem after entering the communication state.

A fast diagnosing method for the interoperability problem in the activation process is described as follows.

From initiation to normal operation, the xDSL transceiver needs to undergo phases such as handshake, channel discovery, training, channel analysis and exchange (all called as initializing process or activation process), and finally enters into the normal operation state (show time). The cause of the interoperability problem occurring in the xDSL transceivers may generally be found by analyzing the messages exchanged between the xTU-C and the xTU-R during the activation process.

In the embodiments of the present invention, the transmitting and capturing of the xDSL exchange messages are simulated by the xDSL transceiver devices (xTU-C or xTU-R) to analyze and determine the solving method for specific interoperability problems, where one or more exchange messages may be modified or constructed, and the entire activation process may be constructed.

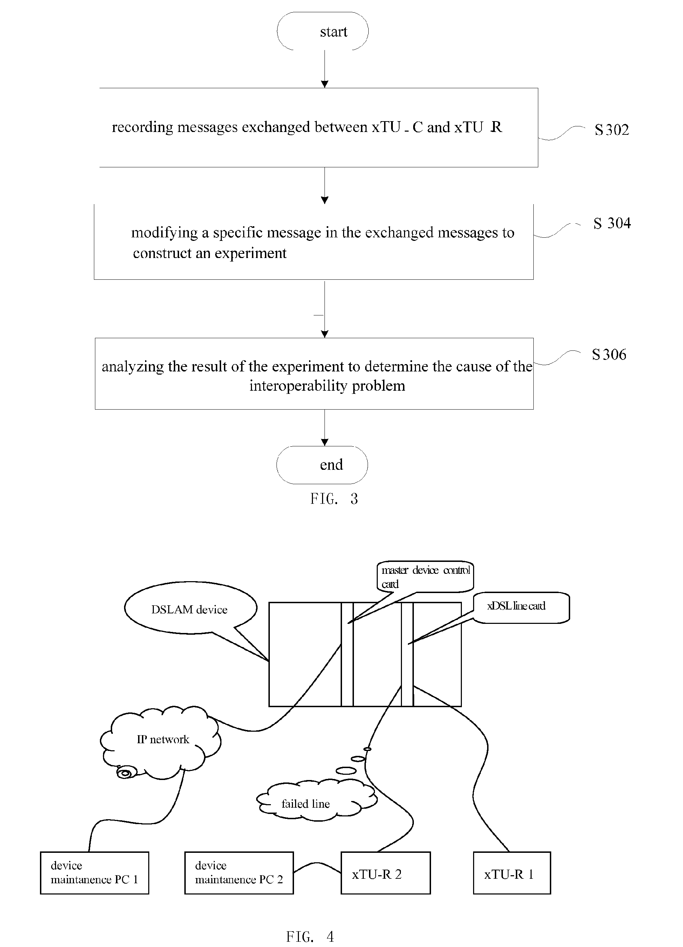

Figure 3 shows a flow chart of a fast diagnosing method for the interoperability problem between digital subscriber line transceivers according to an embodiment of the present invention.

As shown in figure 3, the method includes the following steps:

step S302: Exchange messages exchanged between xTU-C and xTU-R are recorded.

This step may specifically includes steps of: de-activating a port to be analyzed; activating the port; collecting messages exchanged by the port in the activation process; recording the exchange messages in a storage region corresponding to the port; and de-activating the port to recover to the original state.

Step S304: A test is constructed by modifying a specific message in the exchange messages.

Alternatively, this step includes steps of: continuously modifying or constructing the specific message in the exchange messages, and attempting to activate the port with the new specific message; and step S306 includes steps of: upon activating the port, analyzing the result of the test to obtain the cause of the interoperability problem.

Alternatively, the recorded exchange message is modified by taking the standard message configured in the xTU-C or xTU-R as a reference standard, and by providing an interface for modifying the exchange message.

Alternatively, the specific message may be manually selected or automatically selected according to a predetermined rule.

Step S306: the result of the test is analyzed to determine the cause of the interoperability problem.

Alternatively, steps S302, S304, S306 may be executed by the xTU-C, or by an xTU-R locally linked, or cooperatively by the xTU-C and the xTU-R.

Figure 4 show a scenario of application maintenance for xDSL devices. An implementation process according to an embodiment of the present invention will be described in the following by referring to the application scenario as shown in figure 4.

Embodiment 1: A captured exchange message is modified manually and transmitted at the office end (xTU-C).

The principle in brief: The main idea of this solution lies in that the office end (xTU-C) captures exchange messages which are exchanged by the port to be analyzed during the previous activation process, performs a modification test on one or more message contents according to the initial analysis, exchanges the newly modified message content with the peer end to find the cause of the interoperability problem and the solving method.

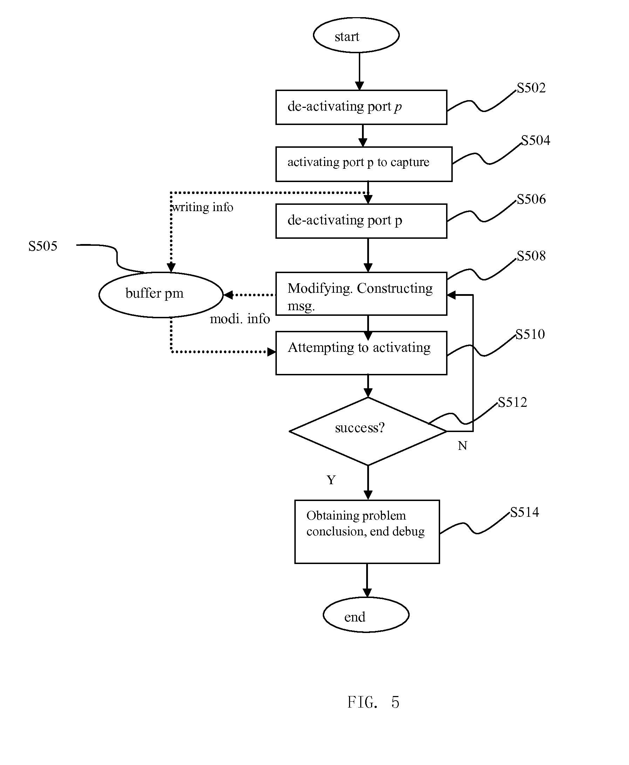

Figure 5 shows a flow chart of a fast diagnosing method for the application scenario in figure 4 according to an embodiment of the present invention. As shown in figure 5, the method includes the following steps:

The process starts, where the xTU-C issues an exchange message capturing command to a port p.

Step S502: The xTU-C automatically issues an activating command to the port, where the template is a default one.

Step S504: The xTU-C starts to detect a handshake request signal from the xTU-R, and then enters into the initializing process. If the handshake phase complies with the G. 994.1 standard, the CLR messages from the xTU-R are collected and the messages associated with capability parameters in respective phases are continuously collected.

Step S505: After collecting the required information, the obtained information is recorded to the storage region pm corresponding to the port.

Step S506: The xTU-C de-activates the port again to recover to the original state.

Step S508: According to the obtained message contents, the xTU-C provides the user with a method of manually modifying associated message contents, so that a corresponding exchange message can be modified or constructed according to the obtained message contents by a user.

Step S510: Another activating exchange based on the newly modified exchange message is carried out by the user.

Step S512: It is determined whether the problem locating and modification are valid. If not successful, it is possible to repeat step S508.

Step S514: If successful, the conclusion on the problem is obtained and the activating debug ends.

Example: Interoperability adaptation with a special CPE by modifying VendorID.

As in the steps of embodiment 1, the VendorID information of the peer end at step S504 is obtained, and at step S508, the local end's VendorID information is modified to be consistent with that of the peer end, to perform a activating debug diagnose.

Embodiment 2: The office end (xTU-C) is configured with inbuilt standard exchange messages which can be modified manually and transmitted.

The principle in brief: This embodiment is substantially the same as the embodiment 1 described in the above. The difference lies in that the exchange messages are standard, established according to the maximum compatibility, and is built in the office end. At the same time, an interface provided to the user is configured to modify and construct these exchange messages.

Implementation steps:
1. A de-activating operation is performed on the port to be analyzed.
2. The inbuilt standard exchange messages configured in the office end (xTU-C) are modified and constructed by the user.
3. Another activating exchange is carried out according to the newly modified exchange messages to determine whether the problem locating and modification is valid; if not successful, it is possible to repeat step 2.

Embodiment 3: A captured exchange message is modified manually and transmitted at the terminal (xTU-R).

The principle in brief: This embodiment is substantially the same as embodiment 1, and the main difference lies in that the handling party is at the terminal end.

The implementation steps are substantially the same as steps S504, S508, S510 of embodiment 1, but are performed by the terminal (xTU-R) instead of the office end.

Embodiment 4: The terminal (xTU-R) is configured with standard exchange messages which can be modified and transmitted.

The principle in brief: This embodiment is substantially the same as embodiment 2, and the main difference lies in that the handling party is at the terminal end.

Implementation steps: The implementation steps are the same as steps 2, 3 of embodiment 2, but are performed by the terminal (xTU-R) instead of the office end.

Embodiment 5: An integrated manually analyzing method

The principle in brief: An integrated analyzing of the above embodiments 1-4, where the terminal and the office end cooperate to perform an accurate locating and solving. The implementation step may be based on the specific steps in the above embodiments.

It can be seen from the above description that, by using the technical solutions of the embodiments of the present invention, because the xDSL transceiver itself integrates the function of collecting and saving the exchange messages in the activation process between the xTU-C and the xTU-R, or the function having inbuilt standard exchange messages, the embodiments of the present invention can provide users with a manner that the contents of activating exchange messages can be modified and constructed exchange messages and the activating test can be performed at the office end or terminal end, and the office end user can perform a fast locating and modification by remotely accessing to effectively solve the interoperability problem between different xDSL transceiver xTU-C and xTU-R, thus providing convenience to the telecommunication service operator and the maintenance persons for the telecommunication devices, and saving the cost. Therefore, the embodiments of the present invention achieve the following technical effects:

The maintenance person for devices can fast, effectively and accurately locate and solve the interoperability problem in the xDSL device activation process, thereby simplifying the handling process, reducing the workload and difficulty, saving a large amount of cost and increasing the efficiency.

A fast diagnosing method for the interoperability problem after the xDSL transceivers enter into the normal operation state will be described in the following. Taking the link drop problem as an example, as shown in figure 4, a flow chart of the fast diagnosing method for the link drop problem in the digital subscriber line is shown. The process of dealing with the link drop problem through the above method may includes the following operations:

Step S602: Key information exchanged between the xTU-C and the xTU-R within a predetermined time is recorded before the link drop.

Alternatively, the recording includes steps of: setting the predetermined time (a time period in which the port to be analyzed monitors exchange messages) and setting the time interval to be monitored; setting a buffer; recording the key information exchanged between the xTU-C and the xTU-R in the set time interval for monitoring, and saving the time stamp for the key information in the buffer, and at the same time removing the key information exceeding the predetermined time in the buffer, wherein each time a link drop occurs in the recording process, the data in the buffer is saved in the storage region.

Alternatively, the buffer is a ring data structure, and its size is dependent on the predetermined time.

Alternatively, the recorded key information includes at least one of information of interaction management and information of dynamic change request.

Alternatively, the information of interaction management includes at least on of the following: signal to noise ratio redundancy, signal attenuation, transmit power, receiving power.

Alternatively, the information of dynamic change request includes at least one of the following information: seamless rate adaptation, bit swap, power control request, dynamic rate adjustment.

Step S604: The recorded key information of interactions is analyzed to determine the cause of the link drop.

Alternatively, determining the cause of the link drop includes the following steps: performing a test constructed by modifying a specific message in the exchange messages; and analyzing the result of the test to determine the cause of the link drop.

It can be seen from the above description that, the present embodiment solves the problem of low diagnose efficiency of the prior art in solving the link drop problem of xDSL devices on the wideband access network, enabling the maintenance person for the devices to fast and effectively locate and solve the link drop problem, thereby simplifying the handling process, reducing the workload and difficulty, saving a large amount of cost and increasing the efficiency.

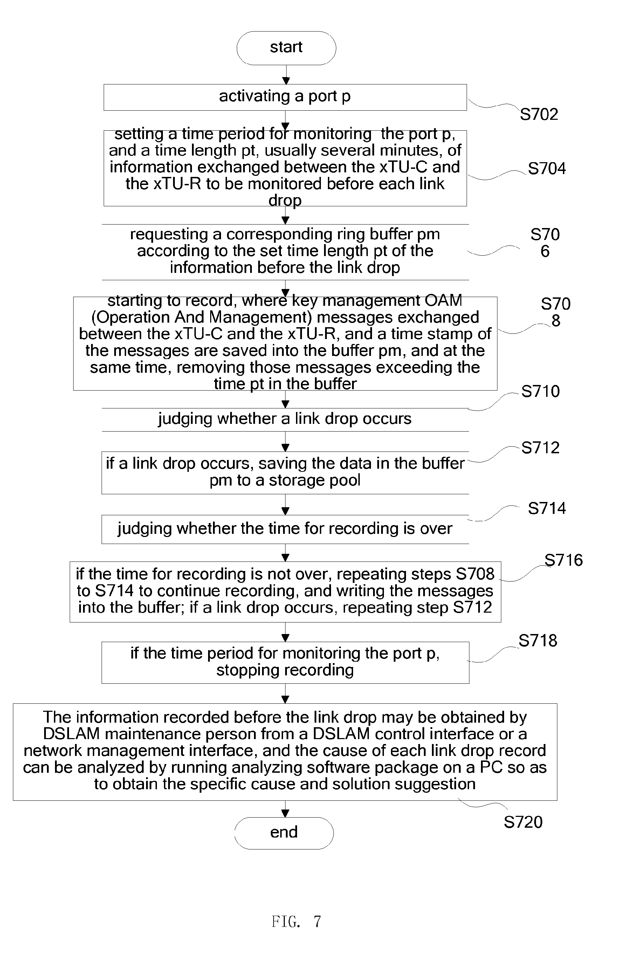

A typical implementing process of the fast diagnosing method for the link drop problem will be described in the following by referring to the accompanying drawing. As shown in figure 7, the method includes the following steps:

Step S702: A port p is activated.

Step S704: A time period for monitoring the port p, and a time length pt, usually several minutes, of information exchanged between the xTU-C and the xTU-R to be monitored before the link drop are set.

Step S706: A corresponding ring buffer region pm is requested according to the set time length pt of the information to be monitored before the link drop.

Step S708: Recording is started, where key OAM (Operation And Management) messages exchanged between the xTU-C and the xTU-R, and a time stamp of the messages are saved into the buffer pm, and at the same time, those messages exceeding the time pt in the buffer are removed. The OAM message mainly includes the content as shown in table 2:

**Table 2: information of Key OAM associated with the link drop**

| information of interaction management | information of dynamic change request |
|---|---|
| Signal to noise ratio redundancy | Seamless rate adaptation |
| Signal attenuation | Bit swap |
| Transmission power | Power control request |
| Receiving power | DRR (Dynamic Rate Repartition) |

Step S710: It is judged whether a link drop occurs.

Step S712: If a link drop occurs, the data in the buffer pm is saved into a storage pool;

Step S714: It is judged whether the time for recording is over.

Step S716: If the time for recording is not over, steps S708 to S714 are repeated to continue recording, and the messages are written into the buffer; if a link drop occurs, step S712 is repeated.

Step S718: If the time period for monitoring the port p is over, recording is stopped.

Step S720: The information recorded before the link drop may be obtained by DSLAM maintenance person from a DSLAM control interface or a network management interface, and the cause of each link drop record can be analyzed by running analyzing software package on a PC so as to obtain the specific cause and solution suggestion.

It can be seen from the embodiment that the DSLAM device takes the key information exchanged between the xTU-C and the xTU-R recorded for any port several minutes before the link drop as a reference for locating the cause of the link drop. Further, the DSLAM device runs the analyzing software on the PC to analyze the specific cause according to the link drop records and provide a suggestion. It is possible to simplify the handling process, reduce the workload and difficulty, save a large amount of cost and increase the efficiency of locating analysis.

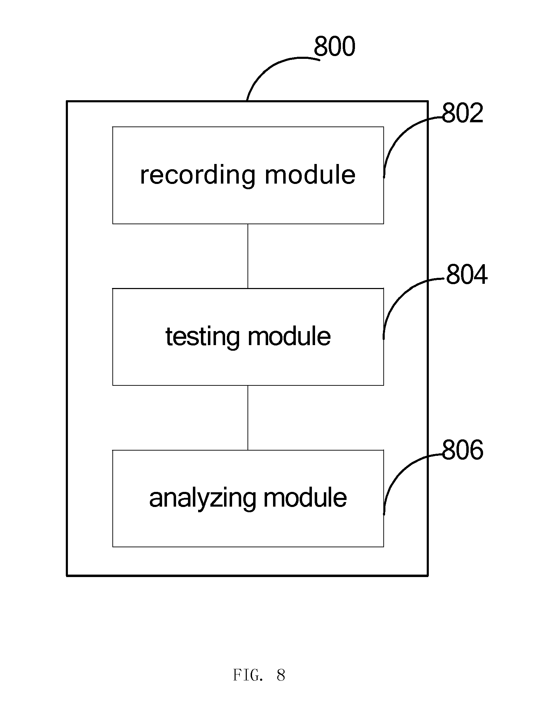

Figure 8 is a block diagram showing a fast diagnosing device for the interoperability problem between digital subscriber line transceivers according to an embodiment of the present invention. As shown in figure 8, the device 800 includes: a recording module 802 configured to record messages exchanged between xTU-C and xTU-R.

Alternatively, the recording module 802 includes (not shown): a first module configured to de-activate a port to be analyzed; a second module configured to activate the port; a third module configured to collect messages associated with capability parameters which are exchanged by the port in the activation process, as exchange messages; a fourth module configured to record the exchange messages into a storage region corresponding to the port; and a fifth module configured to de-activate the port to recover to the original state.

Alternatively, the recording module 802 includes (not shown): a time setting module configured to seta predetermined time (a time period in which the port to be analyzed monitors exchange messages) and set a time interval to be monitored; a buffer region requesting module configured to set a buffer region; and a sub-recording module configured to record the key information exchanged between the xTU-C and the xTU-R in the time interval, and save a time stamp for the key information into the buffer region, and at the same time remove the key information exceeding the predetermined time in the buffer region, where each time a link drop occurs in the recording process, the data in the buffer region is saved into the storage region.

A testing module 804 is configured to construct a test by modifying a specific message in the exchange messages; and an analyzing module 806 is configured to analyze the result of the test to determine the cause of the interoperability problem.

Alternatively, the modification of exchange message is based on the standard messages configured in the xTU-C or xTU-R as a reference standard, and an interface for modifying the exchange message is provided.

Alternatively, the testing module continuously modifies or constructs the specific message in the exchange messages, and attempts to activate the port with the new specific message; and upon activating the port, the analyzing module analyzes the attempt to obtain the cause of the interoperability problem.

Alternatively, the specific message may be manually selected or automatically selected according to a predetermined rule.

Alternatively, the recording module 802, testing module 804 and analyzing module 806 may be executed by the xTU-C, or by the xTU-R locally linked, or cooperatively by the xTU-C and the xTU-R.

It can be seen from the above description that, by using the technical solutions provided by the above embodiments of the present invention that, because the xDSL transceiver itself integrates the function of collecting and saving the messages exchanged between the xTU-C and the xTU-R, or the function having inbuilt standard exchange message, the embodiments of the present invention can provide to subscribers functions of modifying or constructing the contents of exchange messages at the office end or terminal end and performing the test to effectively solve the interoperability problem between different xDSL transceiver xTU-C and xTU-R, thus providing convenience to the telecommunication service operator and the maintenance persons for the telecommunication devices, and saving the cost. The maintenance person for devices can fast, effectively and accurately locate and solve the interoperability problem between xDSL devices, thereby simplifying the handling process, reducing the workload and difficulty, saving a large amount of cost and increasing the efficiency.

One skilled in the art apparently knows that respective modules or steps in the above embodiments of the present invention may be implemented by a general purpose calculating device. They may be incorporated in a single calculating device, or distributed on a network formed by a plurality of calculating devices. Alternatively, they may be implemented by program codes executable by the calculating device, and therefore, they may be stored in a storage device so as to be executed by the calculating device, or they may be made as respective integrated circuit modules, or a plurality of modules or steps of them may be made as a single integrated circuit module. In this way, the present invention is not limited to any specific combination of hardware and software. It should be noted that any change in these specific embodiments is obvious for one skilled in the art, without departing from the protection scope of the present invention.

The above are only exemplary embodiments of the present invention, and should not be construed as limitation to the present invention. For one skilled in the art, the present invention may have various changes and variations. Within the spirit and principle of the present invention, any modification, equivalent replacement, improvement should be included in the protection scope of the present invention.

## Claims

1. A fast diagnosing method for the interoperability problem between digital subscriber line, xDSL, transceivers, comprising:
recording exchange messages exchanged between a Central Office xDSL Terminal Unit, xTU-C and a Remote xDSL Terminal Unit, xTU-R;
modifying a specific message in the exchange messages to perform an exchange test with the modified message; and
analyzing the result of the exchange test to determine the cause of the interoperability problem.

2. The method according to claim 1, wherein the recording messages exchanged between xTU-C and xTU-R comprises:
de-activating a port to be analyzed;
activating the port;
collecting exchange messages exchanged by the port in the activation process;
recording the exchange messages into a storage region corresponding to the port; and
de-activating the port to recover to the original state.

3. The method according to claim 1, wherein through an interface for modifying the exchange messages, the exchange messages are modified by taking the standard message configured in the xTU-C or xTU-R as a reference standard.

4. The method according to claim 2 or 3, wherein the modifying a specific message in the exchange messages to perform an exchange test with the modified message; and analyzing the result of the exchange test to determine the cause of the interoperability problem specifically comprises:
continuously modifying the specific message in the exchange messages, and attempting to activate the port with the modified specific message; and
upon activating the port, analyzing the attempt to obtain the cause of the interoperability problem.

5. The method according to claim 1, wherein the recording exchange messages exchanged between xTU-C and xTU-R comprises:
setting a time period in which the port to be analyzed monitors exchange messages and setting a time interval to be monitored;
setting a buffer;
recording exchange messages exchanged between the xTU-C and the xTU-R in the time interval, and saving a time stamp for the exchange messages into the buffer, and at the same time removing those exchange messages exceeding the time interval for recording the exchange messages in the buffer, wherein each time a link drop occurs in the recording process, the data in the buffer is saved in the storage region.

6. The method according to claim 5, wherein the exchange message comprises: at least one of information of interaction management and information of dynamic change request.

7. The method according to claim 6, wherein the information of interaction management comprises at least one of the following information: signal to noise ratio redundancy, signal attenuation, transmission power, receiving power.

8. The method according to claim 6, wherein the information of dynamic change request comprises at least one of the following information: seamless rate adaptation, bit swap, power control request, dynamic rate adjustment.

9. The method according to claim 5, wherein the buffer is a ring data structure, and its size is dependent on the time period for storing the exchange messages.

10. The method according to claim 1, wherein the specific message is manually selected or automatically selected according to a predetermined rule.

11. The method according to claim 1, wherein the process of fast diagnosing is executed by the xTU-C, or by the xTU-C locally linked to xTU-R, or cooperatively by the xTU-C and the xTU-R.

12. A fast diagnosing device for the interoperability problem between digital subscriber line, xDSL, transceivers, comprising:
a recording module, configured to record exchange messages exchanged between Central Office xDSL Terminal Unit, xTU-C, and a Remote xDSL Terminal Unit, xTU-R;
a testing module, configured to modify a specific message in the exchange messages to perform an exchange test with the modified message; and
an analyzing module, configured to analyze the result of the exchange test to determine the cause of the interoperability problem.

13. The device according to claim 12, wherein the recording module comprises:
a first module, configured to de-activate a port to be analyzed;
a second module, configured to activate the port;
a third module, configured to collect exchange messages exchanged by the port in the activation process;
a fourth module, configured to record the exchange messages into a storage region corresponding to the port; and
a fifth module, configured to de-activate the port to recover to the original state.

14. The device according to claim 12, wherein the recording module comprises:
a time setting module, configured to set a time period in which the port to be analyzed monitors exchange messages and set a time interval to be monitored;
a buffer requesting module, configured to set a buffer region; and
a sub-recording module, configured to record key information exchanged between the xTU-C and the xTU-R in the time interval, and save a time stamp for the key information in the buffer region, and at the same time remove those key information exceeding the predetermined time in the buffer region, wherein each time a link drop occurs in the recording process, the data in the buffer region is saved into the storage region.
